# EUROPEAN PATENT APPLICATION

(11) **EP 4 231 383 A1**
(43) Date of publication of application: **23.08.2023**
(21) Application number: 21880409.4
(22) Date of filing: 07.10.2021
(51) Int. Cl.: H01M 4/36, H01M 4/38, H01M 4/48, H01M 4/587, H01M 4/62, C01B 33/02, C01B 32/19, H01M 10/052

(54) **SILICON NANOCOMPOSITE STRUCTURE POWDER FOR NEGATIVE ELECTRODE MATERIAL, AND METHOD FOR MANUFACTURING SAME**

(30) Priority: 16.10.2020 KR 20200134080
(71) Applicant: S-Materials Inc., Anseong-si, Gyeonggi-do 17554 (KR)
(72) Inventor: LEE, Kee Sun, Hwaseong-si Gyeonggi-do 18482 (KR); CHOI, Yi-Sik, Gwacheon-si Gyeonggi-do 13835 (KR); MOON, Sung-Hwan, Suwon-si Gyeonggi-do 16505 (KR); YOO, Hyoung-Geun, Bucheon-si Gyeonggi-do 14767 (KR)
(74) Representative: von Füner, Nicolai
(86) International application number: PCT/KR2021/013822
(87) International publication number: WO 2022/080762

(57) **Abstract**

The present disclosure relates to a silicon nanocomposite structure powder for a negative electrode material, and a method for manufacturing same, wherein a SiOₓ layer is formed on the surface of ultrafine silicon powder by a low-temperature oxidation reaction, and then the silicon powder is milled with graphite powder having excellent conductivity to form a nanocomposite structure, thus achieving improved discharge capacity, efficiency, and cycle characteristics. The method for manufacturing a silicon nanocomposite structure powder for a negative electrode material according to the present disclosure is characterized by comprising the steps of: mechanically milling micro-sized micro silicon powder into nano-sized nano silicon powder; forming an SiOₓ (1<x<2) layer on the surface of the nano-silicon powder by surface-oxidizing the nano-silicon powder at a low temperature; and dispersing the silicon powder, with the SiOₓ (1<x<2) layer formed on the surface thereof, in a graphite matrix by mixing and milling the silicon powder, with the SiOₓ (1<x<2) layer formed on the surface thereof, with graphite powder.

## Description

### Technical Field

The present disclosure relates to a negative electrode material for a lithium-ion battery. More particularly, the present disclosure relates to a silicon nanocomposite structure powder for a negative electrode material having improved discharge capacity, efficiency, and cycle characteristics by forming a SiOₓ (1<x<2) layer by a low-temperature oxidation reaction on the surface of an ultrafine silicon powder, and then nanocomposite structuring the ultrafine silicon powder by milling with a highly conductive graphite powder, and a method for manufacturing the same.

### Background Art

Carbon electrodes used as a negative electrode in lithium-ion batteries have the advantage of excellent charging and discharging efficiency, but their low theoretical capacity of 375 mAh/g limits their use as a negative electrode material in next-generation lithium-ion batteries that require high cell capacity.

Silicon (Si), used as a negative electrode material, has a high theoretical capacity of about 3600 mAh/g, but when charging a Li-ion battery, Li reacts with Si to form Li₄₄Si, which causes a large volume expansion of about 400%. This volume expansion can cause cracks or electrical shorts in the negative electrode material of a lithium-ion battery, which is made of silicon, leading to a reduced charge and discharge life and efficiency.

SiOₓ nano powder has a high battery capacity of approximately 1500 mAh/g, which may vary depending on the oxygen concentration of SiOₓ. When nano-sized SiOₓ nano powder is used as a negative electrode material for a lithium-ion battery, volume expansion does not occur, so problems such as cracks or short circuits can be prevented in advance.

The non-stoichiometric amorphous silicon oxide SiOₓ (1<x<2) acts as a buffer to mitigate the volume change (about 300%) due to lithiation/delithiation of silicon, as oxides such as lithium oxide (Li₂O), lithium silicate (Li₄SiO₄), etc., are preferentially produced during the charge/discharge process, and is characterized by reducing the stress inside the electrode (stress relief). As a result, the non-stoichiometric amorphous silicon oxide is known to have stable cycle characteristics with long life, although its charge and discharge capacity is lower than that of pure silicon.

The reason for the relatively low discharge capacity of the known SiOₓ powder materials is that the phase fraction of silicon to react with lithium is very small compared to pure silicon (Si), and SiOₓ preferentially forms an irreversible phase such as lithium oxide (Li₂O) when reacting with lithium ions.

Korean Patent Registration No. 10-1081864 (Patent Document 1), titled "Method for producing high purity SiOₓ nano powder with excellent volatility and apparatus for producing the same," describes a method for producing SiOₓ powder with a size of tens of nanometers (nm) by melting silicon and spraying gas on its surface. This is the process of inducing a surface reaction by contacting oxygen gas with the vapor generated on the surface of the silicon melt, and it is difficult to expect high productivity. There is also a problem in that it is difficult to induce a reaction with uniform oxygen in the process of controlling the amount of steam generated by increasing the steam pressure by adjusting the temperature of the molten metal.

Korean Patent Registration No. 10-1999191 (Patent Document 2) and No. 10-1586816 (Patent Document 3) disclose the technologies for mixing Si and SiO₂ raw powder, then heating and pulverizing at high temperature to obtain SiOₓ powder and reacting the powder surface with Mg to form composite oxides of Mg and Si (MgSiO₃ (enstatite), Mg₂SiO₄ (forestetite)) on the surface of SiOₓ powder.

These surface modifications in Patent Document 2 and Patent Document 3 have the effect of delaying the formation of lithium oxide (SiOₓ-> Li₂O), an irreversible phase that forms in reaction with lithium during charge and discharge, which inhibits the initial charge and discharge capacity degradation. However, the methods of Patent Document 2 and Patent Document 3 have a problem in that it is difficult to form a uniform oxide layer on the surface of the powder, and thus there is a limitation in improving properties.

Korean Patent Laid-open Publication No. 10-2007-0105874 (Patent Document 4), titled "Method for producing SiOₓ (x<1)" relates to a method for heating a precursor (starting material) that generates vapors of silicon oxide and metal under an inert gas atmosphere at a temperature range of 1100°C to 2400°C to precipitate and capture mixed vapors of silicon oxide and metal on a deposition surface.

Patent Document 4 has technical and economic problems in that productivity is low, it is difficult to form a surface oxide film having a uniform and constant thickness, and energy cost (electrical energy) is high.

Korean Patent Laid-open Publication No. 10-2005-0119214 (Patent Document 5) discloses a method of heating a mixture of silicon oxide and metal powder in a vacuum to generate SiOₓ gas and using the SiOₓ gas to produce SiOₓ precipitates in a low-temperature precipitator.

In addition, a study on the preparation of SiOₓ nano powders with good dispersion using a pulsed plasma was reported in Thin Solid Films 518 (2010) (Non-Patent Reference 1), in which a technique for the preparation of SiOₓ nano powders with limited oxidation reaction was reported by controlling process parameters such as reactive gas and oxygen flow.

As such, the core of the related art can be summarized as the preparation of nano-sized SiOₓ powder by evaporation of silicon and reaction with atmospheric gas (Patent Document 1), the preparation and pulverization of SiOₓ powder by mixing silicon and SiO₂ powder and high temperature reaction, and the inhibition of the formation of irreversible phase Li₂O by reacting with an active metal such as Mg to form a complex oxide such as (Mg, Si)Oₓ (Patent Document 2, Patent Document 3).

However, the process technology has limitations such as too large a capacity degradation due to irreversible oxide formation at the beginning of charge and discharge (one-cycle charge and discharge capacity degradation), low productivity due to slow evaporation rate in the case of the manufacturing process to obtain vapor phase, increased energy cost due to high temperature heating process, and difficulty in controlling microstructure such as oxide film fraction and thickness to achieve reproducibility.

In addition, the silicon powder on which the SiOₓ layer is formed generates electrons with a large volume change during charging and discharging, and a matrix structure with excellent conductivity is required to transfer them to the current collector (copper plate). Conventionally, as the matrix structure is formed of amorphous carbon with low conductivity, the charge transfer resistance is high, and as a result, the charge and discharge cycle characteristics (capacity retention, charge, and discharge efficiency) are adversely affected.

### Disclosure

### Technical Problem

The present disclosure is derived to solve the above problems, the objective of the present disclosure is to prepare ultrafine silicon powder by high energy milling, form a SiOₓ (non-stoichiometric silicon oxide, 1<x<2) layer on the surface of the powder by a low-temperature oxidation reaction, and mix the ultrafine silicon powder with graphite powder with good conductivity to form a nanocomposite structure, thereby improving the charge capacity, efficiency, and cycling characteristics. Finally, the objective is to provide a composite material including nano silicon powder surface treated with SiOₓ and a high conductivity graphite matrix and to provide a silicon nanocomposite structure powder for a negative electrode material and a method for preparing the same.

Another objective of the present disclosure is to provide a silicon nanocomposite structure powder for negative electrode materials including at least 50% of the silicon oxide SiOₓ (non-stoichiometric silicon oxide, 1<x<2) phase, preferably a pure SiOₓ phase, precisely oxidized by low-temperature oxidation, which is highly reactive with Li ions and effective in mitigating the volume change (swelling) caused by the reaction of silicon and Li ions inside the powder, and a method for manufacturing the same.

The other objective of the present disclosure is to provide a silicon nanocomposite structure powder for a negative electrode material and a method for manufacturing the same, which can improve charge and discharge cycle characteristics (capacity retention, charge, and discharge efficiency) by reducing charge transfer resistance by utilizing a graphitic structure carbon matrix structure including a graphene layer with excellent conductivity when electrons are generated and transferred to a collector (copper plate) with a large volume change during the charge and discharge process from a silicon powder on which a SiOₓ layer is formed.

### Technical Solution

In order to achieve the above objectives, a method for manufacturing a silicon nanocomposite structure powder for a negative electrode material, accordingto one embodiment of the present disclosure, includes: refining a micro-sized micro silicon powder into a nano-sized nano silicon powder by milling; oxidizing a surface of the nano silicon powder at a low temperature to form a SiOₓ (1<x<2) layer on a surface of the nano silicon powder; and dispersing the silicon powder having a SiOₓ(1<x<2) layer formed on the surface on a matrix of graphite powder by mixing and milling the silicon powder with graphite powder to form a SiOₓ(1<x<2) layer on the surface.

The size of the nano silicon powder is preferably set in the range of 50 to 200 nm.

The milling may be performed by mechanical milling in the range of 6 to 10 hours.

Furthermore, in forming a SiOₓ (1<x<2) layer on the surface of the nano silicon powder, a preferred heat treatment condition for obtaining the SiOₓ(1<x<2) phase may be set in the range of 350°C to 450°C when the heat treatment time is 2 hours.

The thickness of the SiOₓ (1<x<2) layer may be set in the range of 5 to 20 nm.

In addition, when mixing and milling silicon powder having a SiOₓ (1<x<2) layer formed on the surface with graphite powder, the milling time may be set within a range that maintains the crystallinity of the graphite powder. In this case, the milling may be performed for 2 hours or less, and the crystallinity of the graphite powder may be set to 50% or more.

Furthermore, when a silicon powder having a SiOₓ(1<x<2) layer formed on the surface of the silicon powder is mixed and milled with graphite powder, a graphene layer may be formed on the surface of the SiOₓ(1<x<2) layer due to friction between the silicon powder and the graphite powder.

A method for manufacturing silicon nanocomposite structure powders for negative electrode materials, according to another embodiment of the present disclosure, includes: preparing tens to hundreds of micro silicon powders and then proceeding with a refinement process by high-energy milling to obtain nano silicon powders; forming a silicon oxide film having a chemical structure of SiOₓ (1<x<2) on the surface of the nano silicon powder by oxidative heat treatment of the nano silicon powder; and mixing the silicon powder surface modified with the silicon oxide film with a high conductivity graphite powder and performing planetary milling to form a silicon nanocomposite structure powder in which the silicon powder surface treated with SiOₓ is dispersed in a matrix of the graphite powder.

The graphite powder mixed with the silicon powder surface modified with the silicon oxide film may be set to 25% by weight.

The silicon oxide film is at least 50% in fraction and may preferably be a pure SiOₓ (1<x<2) phase.

By planetary milling, pressure welding may be performed between the silicon powder on which the SiOₓ (1<x<2) layer is formed and the plate-like graphite powder.

In this case, as the milling time becomes longer and the ratio of milling balls and powder increases, the graphite is collapsed (decomposed), so the decomposition rate of the graphite structure can be controlled by adjusting the above two variables. As the decomposition rate of graphite structure increases, the electrical conductivity decreases. The amount of graphite powder can be adjusted considering the theoretical capacity of silicon (about 3600 mAh/g).

The silicon nanocomposite structure powder for a negative electrode material, according to an embodiment of the present disclosure, includes: a silicon powder; a SiOₓ (1<x<2) layer formed on the surface of the silicon powder by low-temperature oxidation; and a graphite matrix in which the SiOₓ-treated silicon powder is dispersed.

The size of the silicon powder may be set in the range of 50 to 200 nm, and the thickness of the SiOₓ (1<x<2) layer may be set in the range of 5 to 20 nm.

The silicon nanocomposite structure powder for a negative electrode material, according to an embodiment of the present disclosure, may further include a graphene layer formed between the SiOₓ (1<x<2) layer and a graphite matrix.

### Advantageous Effects

As described above, the present disclosure can provide a silicon nanocomposite structure powder with improved discharge capacity, efficiency, and cycling characteristics by manufacturing an ultrafine silicon powder with a particle size of about 50 to 200 nanometers by high-energy milling, forming a SiOₓ (non-stoichiometric silicon oxide) layer on the surface of the powder by a low-temperature oxidation reaction, and mixing the silicon powder on which SiOₓ layer is formed with a conductive graphite powder by planetary milling.

In other words, silicon nanocomposite structure powders have a layer formed with the silicon oxide SiOₓ phase by low-temperature oxidation, so they have excellent reactivity with Li ions compared to composite oxides (SiOₓ + SiO₂) prepared by conventional high-temperature processes and are effective in mitigating volume changes (swelling) caused by the reaction of silicon and Li ions inside the powder.

In particular, the present disclosure has the effect of modifying the surface of the ultrafine silicon powder with SiOₓ having a thickness of several to several tens of nanometers, and in this process, the size of the silicon powder can be further refined. Instead of conventional SiO₂ (silicon dioxide), SiOₓ (non-stoichiometric silicon oxide), which is highly reactive with lithium ions, is formed through a low-temperature oxidation reaction. This surface modification technology has the advantage of effectively mitigating the volume expansion caused by the reaction between silicon and lithium ions.

The silicon powder on which the SiOₓ layer is formed generates electrons with a large volume change during charging and discharging, and a matrix structure with excellent conductivity is required to transfer them to the current collector (copper plate). Conventionally, the matrix structure was formed with amorphous carbon having low conductivity, but in the present disclosure, by utilizing a carbon matrix structure composed of graphite with excellent conductivity and graphene, the charge transfer resistance is reduced, which is effective in improving the charge and discharge cycle characteristics (capacity retention, charge, and discharge efficiency).

In other words, the electrons produced in the reaction of silicon and lithium ions (lithiation/delithiation) are transferred to the copper plate, which is the collector, and reducing the resistance to the movement of the charge in this process maintains the capacity at high charge and discharge rates. In the present disclosure, conductive graphite powder is used as a matrix to reduce the resistance to the movement of charge, resulting in a characteristic that maintains a charge and discharge efficiency of at least 99%.

### Description of Drawings

FIG. 1 is a manufacturing process illustrating a method for manufacturing silicon nanocomposite structure powder according to the present disclosure;

FIG. 2 is an electron micrograph of a silicon nanocomposite structure (Si/SiOₓ@C) powder manufactured according to the present disclosure, showing (a) a scanning electron micrograph of the powder, (b) a transmission electron micrograph of the powder, and (c) a high-resolution electron micrograph of the tissue inside the powder;

FIG. 3 is a graph showing the chemical structure of the surface after oxidation in air at 450°C for 2 hours and X-ray photoelectron spectroscopy (XPS) of the powder prepared by high-energy milling for 10 hours;

FIG. 4 is a graph comparing the charge-discharge cycle characteristics (capacity and efficiency changes) of pure silicon powder (nano-Si) prepared by high-energy milling, a powder with a 10 nm thick SiOₓ layer formed on the silicon powder (Si/SiOₓ), and a final silicon nanocomposite structure powder (Si/SiOₓ@C) prepared by milling with a SiOₓ layer thickness of 10 nm and additional 25% by weight of graphite (50% graphite crystallinity); and

FIG. 5 is a graph representing the change in capacity with a change in charge/discharge rate of the final silicon nanocomposite structure powder manufactured according to the present disclosure.

### Best Mode

### Mode for Invention

Hereinafter, embodiments according to the present disclosure will be described in detail with reference to the accompanying drawings. In this process, the sizes and shapes of the components shown in the drawings may be exaggerated for clarity and convenience of description.

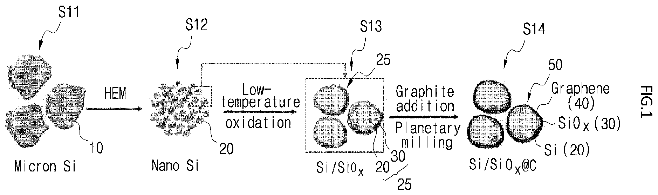

FIG. 1 is a manufacturing process illustrating a method for manufacturing silicon nanocomposite structure powder according to the present disclosure;

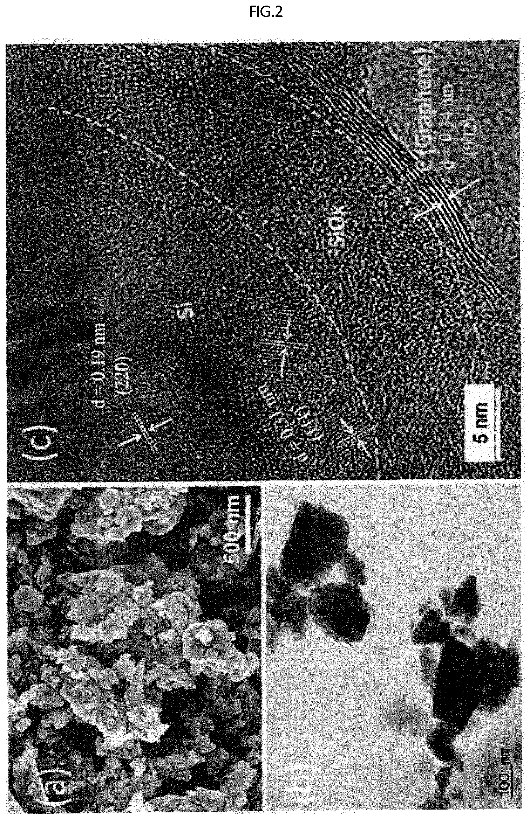

Referring to FIG. 1, the silicon nanocomposite structure powder 50, according to the present disclosure, has a SiOₓ (non-stoichiometric silicon oxide, 1<x<2) layer 30 formed by low-temperature oxidation on the surface of a nano silicon powder 20 having a size of about 50 to 200 nm, in which the SiOₓ surface-treated silicon powder 25 is mixed with a highly conductive graphite powder by planetary milling to form a structure in which the SiOₓ surface-treated silicon powder 25 is dispersed in a matrix of the highly conductive graphite powder as shown in FIG. 2.

The silicon nanocomposite structure powder 50, according to the present disclosure, forms a SiOₓ (non-stoichiometric silicon oxide, 1<x<2) layer 30, which reacts well with lithium ion, by a low-temperature oxidation reaction instead of SiO₂ (silicon dioxide), which is produced by high-temperature heating. The silicon nanocomposite structure powder 50, according to the present disclosure, can effectively mitigate the volume expansion caused by the reaction between silicon (Si) and lithium ions through such surface modification technology.

As described above, a SiO₂ (silicon dioxide) film is prevented from forming on the surface of the nano silicon powder 20, and the heat treatment temperature to obtain a 100% SiOₓ phase is preferably in the range of 350°C to 450°C, and when the heat treatment temperature is less than 350°C, the formation of SiOₓ is practically not expected, and when the heat treatment temperature exceeds 450°C, a 100% SiOₓ phase is not obtained, and the generation rate of SiO₂ (silicon dioxide) gradually increases.

When the heat treatment temperature (i.e., oxidation temperature) is in the range of 350°C to 450°C, the thickness of the SiOₓ layer 30 formed on the surface of the nano silicon powder 20 is formed in the range of 5 to 20 nm, and the thickness of the SiOₓ layer 30 increases with the increase of the heat treatment temperature. When the heat treatment temperature reaches 550°C, the fraction of SiO₂ increases, resulting in a SiOₓ/SiC₂ ratio of 70%, and when the heat treatment temperature reaches 650°C, the SiOₓ/SiO₂ ratio decreases to 50%.

In this case, the heat treatment of the nano silicon powder 20 was performed at the time fixed with 2 hours, and if the heat treatment time is increased, the desired thickness of the SiOₓ layer 30 can be formed even at a lower temperature, and if the heat treatment temperature is increased, the desired thickness of the SiOₓ layer 30 can be formed even at a shorter heat treatment time.

The silicon nanocomposite structure powder 50, according to the present disclosure, can control the thickness of the SiOₓ layer 30, and as the thickness increases or the oxidation temperature increases, the lithium oxide (Li₂O) fraction increases during charge and discharge, leading to the consumption of Li ions, which is one of the factors that reduce the capacity.

The silicon nanocomposite structure powder 50, according to the present disclosure, simultaneously has the effect of refinement of silicon because the size of the nano silicon powder 20 inside the powder decreases as the thickness of the SiOₓ layer 30 increases.

As described above, in the present disclosure, low-temperature oxidation heat treatment is performed to obtain a 100% SiOₓ (1<x<2) phase on the surface of the nano silicon powder.

The silicon nanocomposite structure powder 50, according to the present disclosure, is subjected to planetary milling by mixing the silicon powder 25 surface treated with SiOₓ and the graphite powder with excellent conductivity so that the silicon powder 25 surfaces treated with SiOₓ has a dispersed structure in a matrix of the graphite powder with excellent conductivity.

Planetary milling is a method of applying relatively high mechanical energy to a milling object and can be performed by mixing a silicon powder 25 with a SiOₓ (1<x<2) layer 30 formed on the surface with a plate-shaped graphite powder and performing planetary milling to induce pressure welding between the powders.

The longer the milling time, the more the ratio of milling balls to powder increases, and the more the graphite structure collapses (decomposes), so the decomposition rate of the graphite structure can be controlled by adjusting the above two variables. As the decomposition rate of the graphite structure increases, the electrical conductivity decreases.

In the present disclosure, the milling time is within a range not exceeding 2 hours so that the crystallinity of the graphite powder can be maintained above 50% in consideration of electrical conductivity.

The amount of plate-shaped graphite powder mixed with the surface-modified silicon powder 25 can be adjusted considering the theoretical capacity of silicon (about 3600 mAh /g), and, for example, it is preferable to mix 25% by weight.

Hereinafter, a method for manufacturing a silicon nanocomposite structure powder according to an embodiment of the present disclosure will be described with reference to FIG. 1.

First, pure micro-Si powder 10 with a diameter of about 20 µm is prepared (S11), which is then subjected to a refinement process of milling for up to 12 hours on a horizontal high-energy milling device to obtain nano-Si powder 20 with an average diameter of about 50 to 200 nm (S12).

As the milling time increases, the micro Si powder 10 is gradually refined, and after 12 hours, the micro Si powder is no longer refined.

The nano silicon powder 20 manufactured by the high-energy milling is subjected to oxidative heat treatment at a temperature of 250°C to 650°C for 2 hours to form a SiOₓ (1<x<2) layer 30 on the surface of the nano silicon powder 20 to obtain a surface-modified silicon powder 25 (S13). As the heat treatment temperature increases, the SiO₂ phase compared to SiOₓ increases. Since the SiO₂ phase does not react with Li ions, it is preferable to exist in the SiOₓ phase for use as a negative electrode material in lithium secondary batteries.

A SiOₓ (1<x<2) layer 30 is formed on the surface of the nano silicon powder 20, and the surface-modified silicon powder 25 is mixed with highly conductive graphite powder for planetary milling is performed (S14). When the surface-modified silicon powder 25 and the graphite powder are mixed and milled, a graphite coating can be formed on the surface of the SiOₓ (1<x<2) layer 30 of the silicon powder 25 while pressure welding is performed between the powders.

In this case, a thin graphene layer 40 separated from graphite can be formed on the surface of the SiOₓ (1<x<2) layer 30 by friction and pressure welding between graphite and silicon powder. In general, graphene is one of the allotropes of carbon, which is known to be more than 100 times more electrically conductive than copper and more than 100 times more electronically mobile than silicon.

Furthermore, it is desirable to maintain the crystallinity of graphite, which forms a film on the surface of the silicon powder, in order to secure a path for the movement of electrons originating from the silicon powder and to reduce the resistance of the moving charge.

Hereinafter, the manufacturing process of the silicon nanocomposite structure powder, according to the present, disclosure is described in detail. Table 1 shows test conditions for examining the manufacturing conditions of the silicon nanocomposite structure powder for implementing the present disclosure.

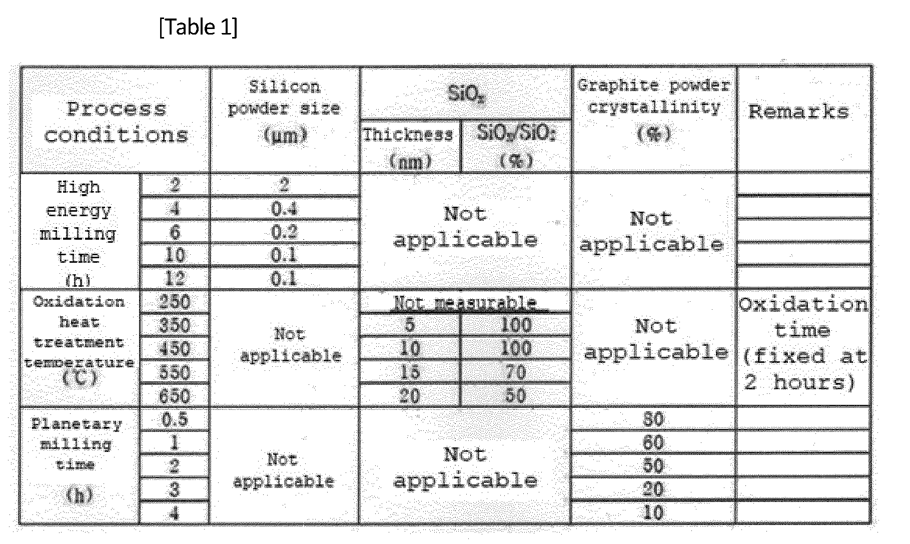

### (Micro silicon powder refinement process)

After preparing low-cost pure micro silicon powder (99.9%, Sigma-Aldrich, Co.) 10 with a diameter of about 20 µm, the ratio of stainless-steel ball to micro silicon (Si) powder 10 was fixed at 15:1 in a horizontal high-energy milling device for high-energy milling, and the milling time was set to 2,4, 6, 10, and 12 hours (h) as shown in Table 1 to proceed with the refinement process of micro silicon (Si) powder 10.

As a result of evaluating the size of the micro silicon (Si) powder 10 according to the milling time, the diameter decreases to about 0.2 µm (200 nm) after 6 hours and is refined to 0.05 µm (50 nm) after 10 hours, and no further size change is seen. Accordingly, a milling time of 6 to 10 hours was found to be adequate to refine the micro silicon (Si) powder 10 into a nano silicon (Si) powder 20 having a size ranging from 0.05 µm (50 nm) to 0.2 µm (200 nm).

### (Oxidation heat treatment process)

The nano silicon (Si) powder 20 having a size of 0.05 to 0.2 µm (50 to 200 nm) was subjected to an oxidation heat treatment in the range of 250°C to 650°C for 2 hours. As a result, SiOₓ could not be observed at 250°C, and it was confirmed that SiOₓ was formed with a thickness of about 5 nm at 350°C, about 10 nm at 450°C, about 15 nm at 550°C, and 20 nm at 650°C.

Considering the charge and discharge capacity, the upper limit of the thickness of the SiOₓ layer 30 formed as a film on the surface of the nano silicon (Si) powder 20 is preferably 20 nm. When the thickness exceeds 20 nm, the mobility of lithium ions decreases, which may cause a decrease in capacity. The most preferable conditions are limited to the oxidation heat treatment temperature and oxidation heat treatment time for forming 100% of SiOₓ, and the thickness can be adjusted by extending the heat treatment time within an appropriate temperature range based on the above embodiment.

In addition to the SiOₓ thickness, the chemical structure of the silicon oxide formed in the oxidation reaction is important, and it was found that the SiO₂ phase increased relative to the SiOₓ phase as the heat treatment temperature increased. As shown in Table 1, the SiOₓ/ SiO₂ (%) ratio decreased to about 70% at a heat treatment temperature of 550°C and decreased to 50% at 650°C. When the heat treatment temperature exceeds 650°C, the SiO₂ phase fraction rapidly increases to 50% or more, which is a major factor in reducing the electrochemical capacity, so it is not preferable to exceed 650°C.

Since the SiO₂ phase does not react with Li ions, it is preferable to exist as a SiOₓ phase. Also, when the heat treatment temperatures were 350°C and 450°C, a 100% SiOₓ phase was obtained on the surface of the nano silicon (Si) powder 20. Therefore, the heat treatment temperature for obtaining a 100% SiOₓ phase is preferably 350°C to 450°C, and the most preferable heat treatment temperature at which the thickness of the SiOₓ layer 30 is formed to be the thickest is 450°C.

### (Graphite matrix and composite process)

The surface-modified silicon (Si) powder 25 is used to obtain a silicon nanocomposite structure powder 50 in which the silicon (Si) powder 25 surface-modified with SiOₓ is dispersed in a matrix of highly conductive graphite powder by pressure welding graphite on the surface of the silicon (Si) powder 25 for the purpose of securing a migration path for electrons generated by the electrochemical reaction of silicon (Si) and Li ions and mitigating the volume change of the silicon.

In orderto perform pressure welding graphite to the surface of the silicon powder 25, surface-modified silicon (Si) powder 25 was mixed with graphite powder, and planetary milling was performed in the range of 0.5 to 4 hours.

The amount of graphite powder can be changed according to the design capacity (discharge capacity), and in the embodiment, the amount of graphite powder is set at 25% by weight. As for milling conditions, zirconia was used as a bead for milling, and the ratio of beads to powder was fixed at 10:1. In the case of milling for 2 hours, the crystallinity of the graphite powder was collapsed by 50% compared to the initial value, and reduced to about 10% at 4 hours.

The present disclosure was achieved based on a 2-hour milling condition in which the crystal fraction of graphite was 50%. When the crystalline fraction of graphite is less than 50%, the charge transfer resistance increases, leading to a decrease in charge/discharge capacity. However, the milling device used in the present disclosure can be used as similar milling equipment in addition to planetary milling, and in this case, it is limited to the condition that the crystal fraction of graphite satisfies at least 50%.

FIG. 2 is an electron micrograph of the silicon nanocomposite structure powder manufactured according to the present disclosure, in which FIG. 2A shows the shape of the synthesized final silicon nanocomposite structure powder 50, FIG. 2B is a high magnification transmission electron microscope (TEM) image of the silicon nanocomposite structure powder 50, and FIG. 2C is a high-resolution electron microscope image of the silicon nanocomposite structure powder 50.

From the electron microscope image of FIG. 2C, it can be confirmed that an amorphous SiOₓ layer was formed, and a graphene layer was formed thinly on the outer layer. The inner (central) part of the powder is crystalline silicon, followed by SiOₓ and graphene layers, and the outermost part is a carbon (graphite) matrix.

The silicon nanocomposite structure powder manufactured according to the present disclosure has the additional effect of reducing the size of the silicon powder inside as a SiOₓ layer is formed on the surface of the silicon powder by an oxidation reaction.

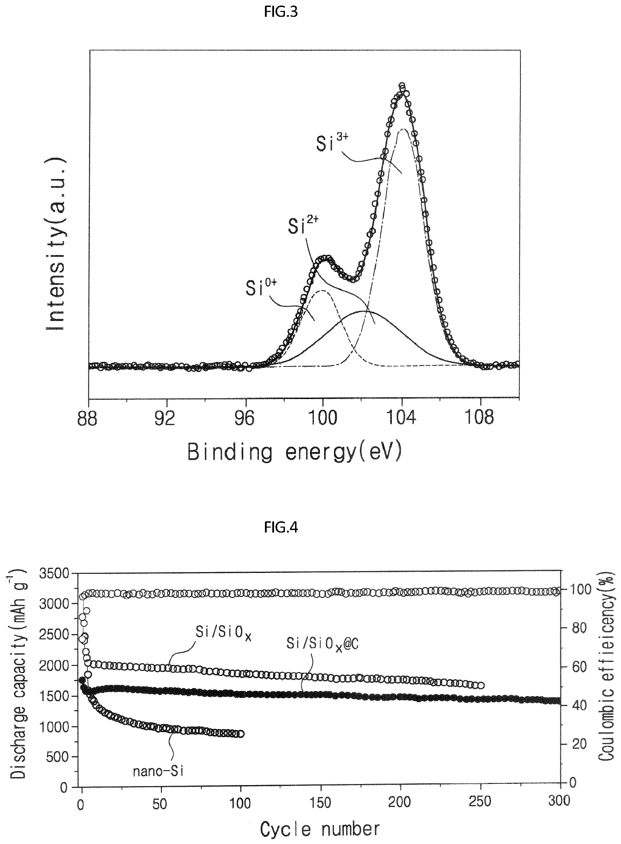

FIG. 3 is a graph showing the X-ray photoelectron spectroscopy (XPS) results of the surface chemical structure of nano silicon powder manufactured by high-energy milling for 10 hours, followed by oxidative heat treatment in air at 450 °C for 2 hours.

Referring to FIG. 3, Si-O binding energy peaks were observed around 102 eV and 104 eV, which means the formation of a SiOₓ (1<x<2) phase. SiO⁺ is the binding energy of pure silicon. A binding energy peak indicating SiO₂ generation was not observed. However, SiO₂ was observed in the heat treatment conditions of 550°C and 650°C, and the SiO₂ phase fraction was about 50% in the case of 650°C. This means that 50% of the SiO₂ phase does not react with Li ions, which means that it does not do enough to mitigate the volume expansion that occurs during the charge and discharge of silicon. As a result, it can be confirmed that the oxidation heat treatment temperature at which 100% SiOₓ phase is formed is preferably 450°C as a condition for maintaining electrochemical properties.

FIG. 4 shows the charge/discharge cycle characteristics (capacity and efficiency change) of a coin cell using the silicon nanocomposite structure powder manufactured according to the present disclosure.

In FIG. 4, nano-Si is a pure silicon powder prepared by high-energy milling, Si/SiOₓ is a powder in which a SiOₓ layer thickness of 10 nm is formed on silicon, and Si/SiOₓ@C is a powder in which a SiOₓ layer thickness of 10 nm is formed, and then pressure welded by milling with an additional 25% by weight of graphite, respectively, and a coin cell was fabricated using each of the embodiment powders of the present disclosure, and the electrochemical properties were compared and evaluated.

The coin cell is manufactured according to the coin-type half-cells (CR-2032) regulations, 80% of active material (silicon), 10% of SFG6 as a graphite-based conductive material, 2% of Ketjen Black as a conductive material, and 8% polyacrylic acid (PAA) as a binder were used. After making the slurry, the slurry is screen-printed, and after drying, punched into a circle to produce a disk-shaped negative electrode plate. Using Li foil as the reference electrode, Celgard 2400 membrane as the separator, and a mixture of EC (ethylene carbonate), DEC (diethyl carbonate), and FEC (fluoroethylene carbonate) in a volume ratio of 5:70:25 dissolved in LiPF6 (lithium hexafluorophosphate) as the electrolyte, the coin cell was fabricated in a glove box filled with high-purity Ar gas.

Referring to FIG. 4, the first cycle (1 cycle) was performed at 0.1C rate (1C rate means 1 hour of full charge/discharge time), and the fourth cycle was performed at 1C rate for a total of 300 cycles.

As a result, compared to pure silicon powder (nano-Si), silicon powder with SiOₓ formed on the surface (Si/SiOₓ) or silicon nanocomposite structure powder with graphene formed on the surface (Si/SiOₓ@C) exhibits superior properties. In particular, the case of graphene-formed silicon nanocomposite structure powder (Si/SiOₓ@C) shows excellent properties as a high-efficiency, high-capacity negative electrode material with an initial 1-cycle capacity of 1748 mAh/g and an efficiency of 87% and a capacity of 1355 mAh/g at 300 cycles, a capacity retention rate of 88%, and an average efficiency of 99.4%.

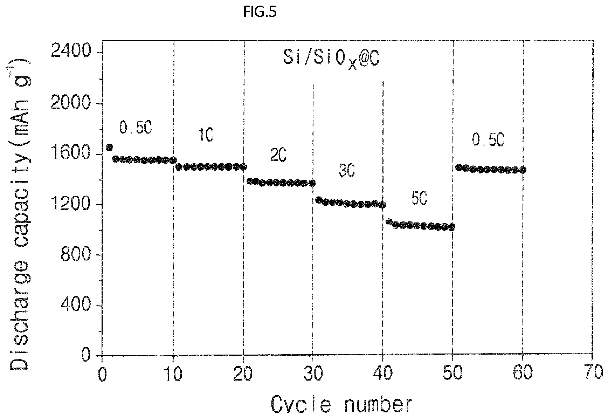

FIG. 5 is the result of a cell produced with silicon nanocomposite structure powder (Si/SiOₓ@C) manufactured according to the present disclosure and subjected to charge and discharge tests at various rates to evaluate the effect of charge and discharge rate on capacity change (fast charge and discharge performance). In FIG. 5, 1C means charging and discharging conditions within 1 hour and 3C within 20 minutes.

Referring to FIG. 5, excellent performance was exhibited in which reproducibility of capacity change was maintained even with repeated speed changes. There was little difference in capacity recovery after fast charge and discharge, with very good results in excess of 1000 mAh/g under 5C conditions. This is a result indicating that the nanocomposite structure is well formed by the convergence of high-quality SiOₓ formation and graphite powder with excellent conductivity.

As described above, the silicon nanocomposite structure powder for a negative electrode material, according to the present disclosure, is different from the conventional method of manufacturing SiOₓ powder by methods such as evaporation, surface reaction, and condensation of silicon,

first, nano silicon powders in the size level of 50 to 200 nm are manufactured in a short time by mechanical milling process from low-cost micro silicon powders,

second, by oxidizing a surface of the nano silicon powder at a low temperature, a surface layer having a chemical structure of SiOₓ (1<x<2) rather than SiO₂ is formed,

third, when mixing and milling silicon powder (Si/SiOₓ) having SiOₓ formed on the surface with graphite powder, by adjusting the milling conditions, it is possible to obtain a silicon nanocomposite structure powder by complexing with a matrix having high conductivity.

Therefore, in the present disclosure, the chemical structure is completely different from that of the existing SiOₓ powder, and there is an effect of uniformly modifying the powder surface. In this process, as a SiOₓ layer is formed on the surface of the silicon powder by an oxidation reaction, a side effect of reducing the size of the silicon powder can also be expected.

In addition, in the present disclosure, when electrons generated from the reaction of active material silicon and lithium ions are moved to a current collector (copper plate) by forming a nanocomposite structure with a graphite base having excellent conductivity, it is effective in reducing charge transfer resistance, thereby improving cycle characteristics and has excellent charging and discharging efficiency.

Furthermore, the present disclosure evaluated the effect of charging and discharging speed on capacity change (high-speed charging and discharging performance) by conducting charging and discharging tests at various speeds and showed excellent performance in which the reproducibility of capacity change was maintained even with repeated speed changes. This indicates that the formation of high-quality SiOₓ and the characteristics of graphite powder having excellent conductivity are well converged, and the nanocomposite structure is well formed.

In addition, in the present disclosure, in terms of economic feasibility, compared to the SiOₓ manufacturing process based on the existing evaporation method, the energy cost is low, the productivity is high, and mass production is easy, so there is an effect of strengthening the price competitiveness of high-performance silicon negative electrode materials.

While the present disclosure has been shown and described above with reference to certain preferred embodiments, the disclosure is not limited to the above embodiments, and various changes and modifications may be made by one having ordinary skill in the art to which the disclosure belongs without departing from the spirit of the disclosure.

### Industrial Applicability

The present disclosure provides silicon nanocomposite structure powders for negative electrode materials with improved discharge capacity, efficiency, and cycling characteristics, which can be applied to the field of negative electrode active materials for lithium secondary batteries with low energy cost, high productivity, and easy mass production to achieve price competitiveness of high-performance silicon negative electrode materials.

## Claims

1. A method of manufacturing a silicon nanocomposite structure powder for a negative electrode material, the method comprising:
refining a micro-sized micro silicon powder into a nano-sized nano silicon powder by milling; and
oxidizing a surface of the nano silicon powder to form a non-stoichiometric amorphous silicon oxide SiOₓ (1<x<2) layer on the surface of the nano silicon powder, thereby producing a SiOₓ-surface treated nano silicon powder.

2. The method of claim 1, wherein the nano silicon powder obtained by milling the silicon powder has a size in a range of 50 to 200 nm.

3. The method of claim 2, wherein the milling is performed for a duration in a range of 6 to 10 hours by mechanical milling.

4. The method of claim 1, wherein in the forming of the SiOₓ(1<x<2) layer on the surface of the nano silicon powder, a heat treatment condition for obtaining a SiOₓ(1<x<2) phase is set to a range of 350°C to 450°C when the heat treatment is performed for 2 hours.

5. The method of claim 1, wherein the SiOₓ (1 <x <2) layer has a thickness in a range of 5 to 20 nm.

6. The method of claim 1, further comprising:
mixing the SiOₓ-surface treated nano silicon powder with graphite powder, milling the resulting mixed powder to disperse the SiOₓ-surface treated nano silicon powder on a matrix made of the graphite powder, and forming a graphene layer on a surface of the SiOₓ (1<x<2) layer of the SiOₓ-surface treated nano silicon powder.

7. The method of claim 6, wherein the milling is performed for 2 hours or less.

8. The method of claim 6, wherein when mixing and milling the SiOₓ-surface treated nano silicon powder with the graphite powder, a milling time is set such that the crystallinity of the graphite powder is maintained at least 50%.

9. A method of manufacturing a silicon nanocomposite structure powder for a negative electrode material, the method comprising:
preparing a micro silicon powder and performing a refinement process on the micro silicon powder using high-energy milling to obtain a nano silicon powder;
obtaining a SiOₓ-surface-treated nano silicon powder by oxidizing a surface of the nano silicon powder to form a non-stoichiometric amorphous silicon oxide SiOₓ (1<x<2) layer on the surface of the nano silicon powder; and
mixing the SiOₓ-surface-treated nano silicon powder with graphite powder, performing planetary milling on the resulting mixed powder is performed to disperse the SiOₓ-surface-treated nano silicon powder in a matrix made of the graphite powder, and forming a graphene layer on the surface of the SiOₓ (1<x<2) layer of the SiOₓ-surface-treated nano silicon powder.

10. The method of claim 9, wherein the graphite powderto be mixed is set to 25% by weight.

11. A silicon nanocomposite structure powder for a negative electrode material, the silicon nanocomposite structure powder comprising:
a nano silicon powder;
a non-stoichiometric amorphous silicon oxide SiOₓ (1<x<2) layer formed on a surface of the nano silicon powder by surface oxidation; and
a graphite matrix in which the nano silicon powder having the SiOₓ layer thereon is dispersed,
wherein a graphene layer is formed on a surface of the SiOₓ -surface-treated nano silicon powder.

12. The silicon nanocomposite structure powder of claim 11, wherein the nano silicon powder that is obtained by milling a silicon powder has a size in a range of 50 to 200 nm.

13. The silicon nanocomposite structure powder of claim 11, wherein the SiOₓ (1<x<2) layer has a thickness in a range of 5 to 20 nm.

14. The silicon nanocomposite structure powder of claim 11, wherein the crystallinity of the graphite matrix is set to 50% or more.
